# EUROPÄISCHE PATENTANMELDUNG

(11) **EP 1 081 422 A2**
(43) Veröffentlichungstag der Anmeldung: **07.03.2001**
(21) Anmeldenummer: 00250271.4
(22) Anmeldetag: 10.08.2000
(51) Int. Cl.: F16L 13/14

(54) **Pressfittingelement**

(30) Priorität: 31.08.1999 DE 19942609; 24.07.2000 DE 10037436
(71) Anmelder: Mapress GmbH & Co. KG, 40764 Langenfeld (DE)
(72) Erfinder: Neuhaus, Ulrich, 42781 Haan (DE)
(74) Vertreter: Meissner, Peter E., Dipl.-Ing.

(57) **Zusammenfassung**

Die Erfindung betrifft ein Pressfittingelement aus Metall zur Bildung einer unlösbaren, dichten Verbindung von Rohren, das mindestens einen radial nach außen vorstehenden Ringwulst zur Aufnahme eines Dichtringes und einen mit einem schräg verlaufenden Übergang daran anschließenden, der Einschubseite für das Rohr abgewandten, zylindrisch ausgebildeten Bereich aufweist, der einen Anschlag für das einzuschiebende Rohr bildend in einen daran anschließenden zylindrisch ausgebildeten Abschnitt übergeht und der Endbereich des Ringwulstes als ein im Längsquerschnitt gesehen stirnseitig gerader Abschnitt ausgebildet ist. Bei gleicher Nennwanddicke (10) für den zylindrisch ausgebildeten Bereich (7) und den Ringwulst (2,2') einschließlich des radialen Erstreckungsendes (3) weist der Übergang (6) vom zylindrisch ausgebildeten Bereich (7) zum Ringwulst (2) innenseitig eine Schräge mit einem Winkel α 1 gegenüber der Horizontalen von 34 Grad bis 37 Grad auf und das so genannte B-Maß (14) ist gegenüber dem bekannten Pressfittingelement verringert.

## Beschreibung

Die Erfindung betrifft ein Pressfittingelement aus Metall gemäß dem Oberbegriff des Patentanspruches 1.

Das Pressfitting-System für die Hausinstallation aus C-Stahl oder hochlegiertem Stahl sowie Kupfer ist bekannt (siehe Prospekt mapress mannesmann pressfitting-system, Lieferprogramm Sanitär, Heizung, September 1998, sowie mapress Kupfer 03/1999). Dieses System besteht im wesentlichen aus einem verformbaren Pressfittingelement, das je nach Ausbildung als Bogen oder T-Stück oder Muffe oder Übergangsstück mindestens einen radial nach außen vorstehenden Ringwulst zur Aufnahme eines Dichtringes aufweist und daran mit einen schräg verlaufenden Übergang sich ein in Längsrichtung erstreckender zylindrisch ausgebildeter Bereich anschließt. Am Ende der Erstreckung dieses zylindrischen Bereiches ist eine radial nach innen sich erstreckende sickenförmige Vertiefung angepreßt, die als Anschlag für das einschiebbare, glattendige Rohr dient. Der Endbereich des Ringwulstes ist als ein im Längsquerschnitt gesehen stirnseitig gerader Abschnitt ausgebildet, der senkrecht zur Längsachse des Pressfittingelementes liegt. Die Wanddicke dieses Abschnittes ist gleich der des wulstartig ausgebildeten Bereiches sowie des zylindrisch ausgebildeten Abschnittes und das radiale Erstreckungsende dieses Abschnittes bildet eine kreisrunde Öffnung. Der Innendurchmesser des einen Torus bildenden unverformten Dichtringes ist mindestens gleich oder größer als der Innendurchmesser des zylindrisch ausgebildeten Bereiches. Mittels eines mindestens zwei Pressbacken aufweisenden Presswerkzeuges wird der Ringwulst plastisch und der eingeschlossene Dichtring elastisch verformt. Zusätzlich wird mit dem gleichen Pressvorgang im zylindrischen Bereich des Pressfittingelementes in unmittelbarer Nähe des Ringwulstes eine sickenförmige Vertiefung angepreßt, die auch das darunterliegende eingeschobene Rohr miterfaßt. Der elastisch verformte Dichtring übernimmt bei diesem Verbindungssystem die Dichtfunktion, während die angepreßte sickenförmige Vertiefung die durch den Innendruck entstehenden Längskräfte sowie einen Teil der Momente aufnimmt. Bei der plastischen Verformung des Ringwulstes ist im Schließbereich der Pressbacken eine mehr oder weniger starke Gratbildung unvermeidlich. Die Größe und Art des Grates hängt ab von der Kontur des Pressfittingelementes, vom Fließverhalten des zu verpressenden Werkstoffes und von der Toleranzpaarung Pressfittingelement - Pressbacke. Beim Vergleich der im Sanitär- und Heizungsbereich verwendeten Werkstoffe Kohlenstoffstahl, hochlegierter Stahl und Kupfer ist offensichtlich, dass das Fließverhalten von Kupfer stark von dem von Stahl abweicht. Dies hat zur Folge, dass die bewährte Kontur für das aus Stahl hergestellte Pressfittingelement für aus Kupfer hergestellte Pressfittingelemente bei Verwendung der gleichen Pressbacken hinsichtlich der Gratbildung ungünstig ist. Aber auch die Gratbildung bei Pressfittingelementen aus Stahl ist nicht zufriedenstellend.

Seit Einführung des Verfahrens des Verpressens eines Fittings mit eingeschobenem Leitungsrohr vor mehr als 25 Jahren sind zunehmend mehr und mehr Presswerkzeuge mit den auf die jeweilige zu verpressende Nennabmessung abgestimmten Pressbacken in den Markt gekommen. Gegenwärtig befinden sich mehr als 150.000 Pressbacken im Markt. Die Vorteile des Verpressens statt Schweißen oder Löten sowie Verschrauben oder Kleben sind im Laufe der Jahre auch von den als konservativ einzustufenden Anwendern im Heizungs- und Sanitärbereich anerkannt worden, und es kam das Bedürfnis auf, dieses Verfahren auch auf andere Werkstoffe als Kohlenstoffstahl oder hochlegierten Stahl auszudehnen. Dabei musste der Anbieter solcher Verpresssysteme das möglicherweise unterschiedliche Fließverhalten der neu in das System aufzunehmenden Werkstoffe beachten. Beispielsweise ist dies für Kupfer im Vergleich zu Kohlenstoffstahl oder hochlegiertem Stahl offensichtlich. Eine Möglichkeit zur Lösung des Problems ist, die Kontur der Pressbacke diesem anderen Fließverhalten anzupassen. Dies hätte bedeutet, dass der Anwender solcher Verpresssysteme zwei Werkzeugsätze für jede Nennabmessung hätte vorhalten müssen, mit dem Nachteil der Kosten für die Anschaffung, der Verwechselungsgefahr und des Platzbedarfes. Wegen dieser offensichtlichen Nachteile sind die Anwender nicht bereit, eine Verdoppelung der Anzahl der erforderlich vorzuhaltenden Pressbacken zu akzeptieren.

Vor diesem Hintergrund stellte sich die Aufgabe, ein Pressfittingelement aus Metall, insbesondere Kupfer anzugeben, das unabhängig vom Fließverhalten des zur Herstellung verwendeten Werkstoffes bei Verwendung der sich bewährten Querschnittskontur der im Markt sich befindenden Backen des Presswerkzeuges für die verschiedenen genormten Abmessungen zusammen mit dem darin eingeschobenen Leitungsrohr qualitativ einwandfrei und ohne störende Gratbildung verpressbar ist.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre des Patentes weist bei gleicher Nennwanddicke für den zylindrisch ausgebildeten Bereich den Ringwulst einschließlich des radialen Erstreckungsendes der Übergang vom zylindrisch ausgebildeten Bereich zum Ringwulst innenseitig eine Schräge mit einem Winkel α 1 gegenüber der Horizontalen von 34 bis 37 Grad auf und das so genannte B-Maß ist gegenüber dem bekannten Pressfittingelement verringert. Diese Ausgestaltung hat die Wirkung, dass bei gleicher Einpresstiefe der Pressbacke das zu verpressende Volumen geringer ist und damit die Gratbildung vermindert, im günstigsten Fall sogar ganz unterdrückt wird. Trotzdem ist sichergestellt, dass der Dichtring noch ausreichend elastisch komprimiert wird, damit er seine Dichtfunktion auch unter Betriebsbedingungen aufrechterhalten kann. Dies wird auch dadurch unterstützt, dass der Durchmesser der kreisrunden Öffnung des radialen Erstreckungsendes um 0,8 mm ± 0,2 mm größer ist als der Innendurchmesser des zylindrisch ausgebildeten Bereiches. Dadurch wird sichergestellt, dass der stirnseitig gerade Abschnitt sich beim Verpreßvorgang nicht vorzeitig auf dem Leitungsrohr aufstützt und die Pressverformung des wulstartig ausgebildeten Bereiches dadurch behindert wird. Versuche haben ergeben, dass die vorgeschlagene Kontur des Pressfittingelementes zu einer Minderung der Gratbildung unabhängig vom verwendeten Werkstoff führt. Für Pressfittingelemente aus Kupfer ist diese Konturveränderung aber noch nicht ausreichend. Es wird deshalb weiterbildend vorgeschlagen, bei Pressfittingelementen aus Kupfer den zu den einzelnen Nennabmessungen gehörende Schnurdurchmesser des Dichtringes zu verringern und den Ringwulst im gleichen Umfang zu verkleinern. Die Nennwanddicke wird beibehalten, ebenso der Durchmesser der kreisrunden Öffnung des radialen Erstreckungsendes. Die Verringerung des Schnurdurchmessers des Dichtringes beträgt mindestens 0,2 mm, vorzugsweise 0,5 mm, damit der gewünschte Effekt wirksam wird. Bei einer Verringerung des Schnurdurchmessers von mehr als 1 mm können Undichtigkeiten auftreten.

Weitere Merkmale, Vorteile und Einzelheiten der Erfindung ergeben sich aus der nachfolgenden Beschreibung von in einer Zeichnung dargestellten Ausführungsbeispielen. Es zeigen:
- Figur 1: in einem hälftigen Längsschnitt eine Ausführungsform eines erfindungsgemäß ausgebildeten Pressfittingelementes,
- Figur 2: wie Figur 1, aber für ein Pressfittingelement aus Kupfer.

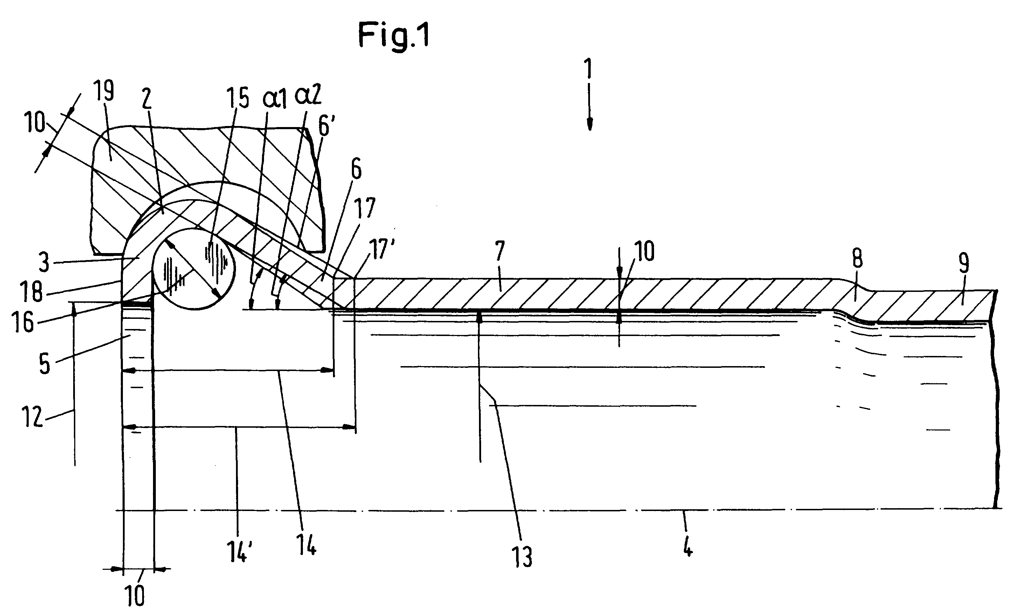

In Figur 1 ist in einem hälftigen Längsschnitt eine Ausführungsform eines erfindungsgemäß ausgebildeten Pressfittingelementes 1 dargestellt. Es besteht aus einem radial nach außen vorstehendem Ringwulst 2, in dem ein hier noch unverformter Dichtring 15 angeordnet ist. Der zu den einzelnen Nennabmessungen gehörende Schnurdurchmesser 16 des Dichtringes 15 entspricht dem bekannten Schnurdurchmesser, wie sie bisher für Pressfittingelemente aus Kohlenstoffstahl oder hochlegiertem Stahl üblich waren. Beispielsweise für die Nennabmessung 54 mm beträgt der Schnurdurchmesser 4 mm. Auf der Einschubseite des hier nicht dargestellten Leitungsrohres schließt an den Ringwulst 2 stirnseitig ein gerader Abschnitt 3 an, der senkrecht zur Längsachse 4 des Pressfittingelementes 1 liegt. Das radiale Erstreckungsende des geraden Abschnittes 3 bildet eine kreisrunde Öffnung 5. Auf der rechten Seite des Ringwulstes 2 schließt sich ein schräger Abschnitt 6 an, der einen Übergang bildet zum zylindrisch ausgebildeten Bereich 7. Am Ende der Erstreckung des zylindrisch ausgebildeten Bereiches 7 ist eine sickenförmige Vertiefung 8 ausgebildet, die einen Anschlag für das einzuschiebende Leitungsrohr bildet. An diese Vertiefung 8 schließt sich ein weiterer zylindrisch ausgebildeter Abschnitt 9 an.

Charakteristisch für dieses Pressfittingelement 1 ist, dass die Nennwanddicke 10 des zylindrisch ausgebildeten Bereiches 7, des Ringwulstes 2 sowie des geraden Abschnittes 3 gleich ist und üblicherweise bei 1,4 - 1,5 mm liegt. Die geringfügige Verringerung der Wanddicke besonders im Verformungsbereich des Ringwulstes 2 soll dabei außer Betracht bleiben. Erfindungsgemäß weist der schräg verlaufende Abschnitt 6, der einen Übergang vom zylindrisch ausgebildeten Bereich 7 zum Ringwulst 2 darstellt, innenseitig einen Winkel α 1 gegenüber der Horizontalen im Bereich von 34 Grad bis 37 Grad auf. Um den Unterschied der Veränderung deutlich zu machen, ist ohne Schraffur die übliche Kontur der bekannten Pressfittingelemente mit eingezeichnet worden. Wesentlich ist, dass der schräg verlaufende Abschnitt 6' flacher verläuft und einen kleineren Winkel α 2 gegenüber der Horizontalen aufweist. Deutlich ist in dieser Darstellung zu erkennen, dass durch den steileren Verlauf des Überganges 6 das so genannte B-Maß 14 sich vermindert, Unter diesem B-Maß wird der Abstand der Kante 17 bzw. 17' am Übergang vom zylindrisch ausgebildeten Bereich 7 zum schräg verlaufenden Übergang 6 bzw. 6 bis zur Außenseite 18 des stirnseitig geraden Abschnittes 3 verstanden. Dieses B-Maß 14 ist erfindungsgemäß verringert. Das wirkt sich in der Weise aus, dass die angesetzte Pressbacke 19 tiefer auf den Bereich des Ringwulstes 2 und des Überganges 6 ansetzt und somit das zu verpressende Volumen verringert wird.

Für eine einwandfreie Verpressung ist außerdem noch von Bedeutung, dass der Durchmesser 12 der kreisrunden Öffnung 5 des stirnseitig geraden Abschnittes 3 um 0,8 mm ± 0,2 mm größer ist als der Innendurchmesser 13 des zylindrisch ausgebildeten Bereiches 7. Dadurch wird sichergestellt, dass beim Verpressen der stirnseitig gerade Abschnitt 3 sich nicht vor dem Schließen der Pressbacken 19 auf das Leitungsrohr aufsetzt und die erforderliche Restverformung des Ringwulstes 2 dadurch behindert wird.

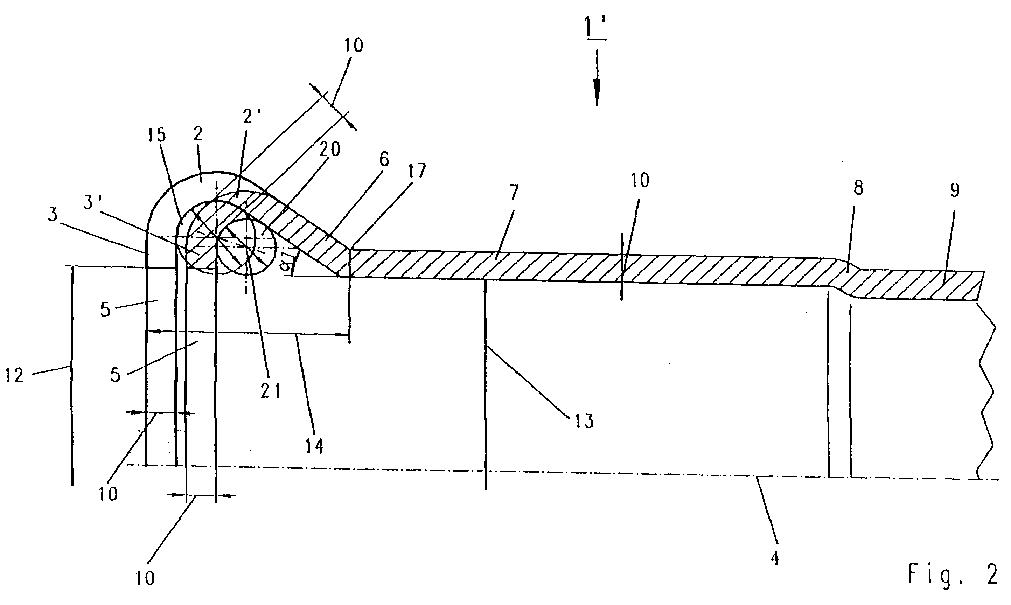

Figur 2 zeigt in einer vergleichbaren Darstellung wie Figur 1 ein zweites Ausführungsbeispiel. Das aus Kupfer hergestellte Pressfittingelement 1' unterscheidet sich in der Weise, dass der Schnurdurchmesser 21 des Dichtringes 20 geringer ist als der bekannte Schnurdurchmesser 16 (Figur 1). Der Ringwulst 2' ist dementsprechend im gleichen Verhältnis verkleinert. Um diesen Unterschied deutlich zu machen, ist in Figur 2 ein Extrembeispiel gewählt worden, in Wirklichkeit sind die Unterschiede geringer. Die sonstigen Randbedingungen, wie gleiche Nennwanddicke 10 für den zylindrisch ausgebildeten Bereich 7, den Ringwulst 2' und den stirnseitig geraden Abschnitt 3' sowie der steilere Winkel α 1 im Bereich von 34 bis 37 Grad sind beibehalten worden. Überträgt man die angesetzte Pressbacke 19 gemäß Figur 1 auf die Verhältnisse in Figur 2, dann wird deutlich, dass durch die Verringerung des Schnurdurchmessers 21 und die damit einhergehende Verkleinerung des Ringwulstes 2' dazu führt, dass die angesetzte Pressbacke 19 noch mehr in Richtung Längsachse 4 verschoben ist und dementsprechend das zu verformende Volumen verkleinert wird. Im Ergebnis führt dies zu der gewünschten verminderten Gratbildung.

| **Bezugszeichenliste** | |
|---|---|
| Nr. | Bezeichnung |
| 1, 1' | Pressfittingelement |
| 2, 2' | Ringwulst |
| 3, 3' | stirnseitig gerader Abschnitt |
| 4 | Längsachse |
| 5 | kreisrunde Öffnung |
| 6, 6' | schräger Übergangsabschnitt |
| 7 | zylindrisch ausgebildeter Bereich |
| 8 | sickenförmige Vertiefung |
| 9 | zylindrisch ausgebildeter Abschnitt |
| 10 | Nennwanddicke |
| 12 | Durchmesser der kreisrunden Öffnung |
| 13 | Innendurchmesser des zylindrisch ausgebildeten Bereiches |
| 14, 14' | B-Maß |
| 15 | Dichtring (erstes Ausführungsbeispiel) |
| 16 | Schnurdurchmesser (erstes Ausführungsbeispiel) |
| 17, 17' | Kante - Übergang zylindrisch ausgebildeter Bereich zu schrägem Übergangsabschnitt |
| 18 | Außenseite stirnseitig gerader Abschnitt |
| 19 | Pressbacke |
| 20 | Dichtring (zweites Ausführungsbeispiel |
| 21 | Schnurdurchmesser (zweites Ausführungsbeispiel) |

## Patentansprüche

1. Pressfittingelement aus Metall zur Bildung einer unlösbaren, dichten Verbindung von Rohren, das mindestens einen radial nach außen vorstehenden Ringwulst zur Aufnahme eines Dichtringes und einen mit einem schräg verlaufenden Übergang daran anschließenden, der Einschubseite für das Rohr abgewandten, zylindrisch ausgebildeten Bereich aufweist, der einen Anschlag für das einzuschiebende Rohr bildend in einen daran anschließenden zylindrisch ausgebildeten Abschnitt übergeht und der Endbereich des Ringwulstes als ein im Längsquerschnitt gesehen stirnseitig gerader Abschnitt ausgebildet ist, der senkrecht zur Längsachse des Pressfittingelementes liegt und dessen Wanddicke gleich ist dem Ringwulst und dem zylindrisch ausgebildeten Bereich und dessen radiales Erstreckungsende eine kreisrunde Öffnung bildet und der Innendurchmesser des einen Torus bildenden unverformten Dichtringes mindestens gleich oder größer ist als der Innendurchmesser des zylindrisch ausgebildeten Bereiches und die Rohrverbindung gebildet wird durch ein das Pressfittingelement umfassendes, mindestens zwei Pressbacken aufweisendes Presswerkzeug, wobei während des Verpressens die Pressbacken sowohl auf den Ringwulst einschließlich des darin eingelegten Dichtringes, als auch auf den der Einschubseite abgewandten, zylindrisch ausgebildeten Abschnitt des Pressfittingelementes einwirken,
dadurch gekennzeichnet,
dass bei gleicher Nennwanddicke (10) für den zylindrisch ausgebildeten Bereich (7) und den Ringwulst (2,2') einschließlich des radialen Erstreckungsendes (3) der Übergang (6) vom zylindrisch ausgebildeten Bereich (7) zum Ringwulst (2) innenseitig eine Schräge mit einem Winkel α 1 gegenüber der Horizontalen von 34 Grad bis 37 Grad aufweist und das so genannte B-Maß (14) gegenüber dem bekannten Pressfittingelement verringert ist.

2. Pressfittingelement nach Anspruch 1,
dadurch gekennzeichnet,
dass der Durchmesser (12) der kreisrunden Öffnung (5) des radialen Erstreckungsendes (3) um 0,8 mm ± 0,2 mm größer ist als der Innendurchmesser (13) des zylindrisch ausgebildeten Bereiches (7).

3. Pressfittingelement nach Anspruch 1 und 2,
dadurch gekennzeichnet,
dass der zu den einzelnen Nennabmessungen gehörende Schnurdurchmesser (16) des Dichtringes (15) bei Pressfittingelementen aus Kohlenstoffstahl oder Edelstahl gleich ist dem bekannten Schnurdurchmesser.

4. Pressfittingelement nach Anspruch 1 und 2,
dadurch gekennzeichnet,
dass der zu den einzelnen Nennabmessungen gehörende Schnurdurchmesser (18) des Dichtringes (16) bei Pressfittingelementen aus Kupfer geringer ist als der bekannte Schnurdurchmesser und der Ringwulst (2') im gleichen Umfang verkleinert ist unter Beibehaltung der Nennwanddicke (10) und dem Durchmesser (12) der kreisrunden Öffnung (5) des radialen Erstreckungsendes (3').

5. Pressfittingelement nach Anspruch 4,
dadurch gekennzeichnet,
dass die Verringerung des Schnurdurchmessers (18) des Dichtringes (16) mindestens 0,2 mm beträgt.

6. Pressfittingelement nach Anspruch 5,
dadurch gekennzeichnet,
dass die Verringerung des Schnurdurchmessers (18) des Dichtringes (16) 0,5 mm beträgt.
